Europäisches Patentamt

European Patent Office

Office européen des brevets

(19)

(11) Numéro de publication: **0 215 712**

**B1**

(12) **FASCICULE DE BREVET EUROPEEN**

(45) Date de publication du fascicule du brevet: **07.11.90**

(51) Int. Cl.⁵: **G 06 K 7/015,** G 06 K 13/08, G 06 K 7/08

(21) Numéro de dépôt: **86401983.1**

(22) Date de dépôt: **10.09.86**

(54) Lecteur encodeur de carte d'identification.

(30) Priorité: **12.09.85 FR 8513558**

(43) Date de publication de la demande:
**25.03.87 Bulletin 87/13**

(45) Mention de la délivrance du brevet:
**07.11.90 Bulletin 90/45**

(84) Etats contractants désignés:
**AT BE CH DE FR GB IT LI LU NL SE**

(56) Documents cités:
**EP-A-0 134 110**
**DE-A-2 555 213**
**FR-A-2 356 206**
**US-A-3 296 605**
**US-A-3 704 360**
**US-A-3 909 595**
**US-A-4 167 664**
**US-A-4 298 116**

**IBM TECHNICAL DISCLOSURE BULLETIN, vol. 20, no. 10, mars 1978, pages 4091,4092, New York, US; P. LEE: "Encoded magnetic stripe detector with decision window"**



(73) Titulaire: **BULL S.A.**
**121 avenue de Malakoff P.B. 193.16**
**F-75764 Paris Cédex 16 (FR)**

(72) Inventeur: **Chevalier, Michel**
**29 rue de la Madeleine**
**F-78 Chevreuse (FR)**
Inventeur: **Briane, Alain**
**31 rue Condorcet**
**F-75009 Paris (FR)**
Inventeur: **Bouaziz, Joel**
**La Ferme du Temple**
**F-91130 Ris Orangis (FR)**

(74) Mandataire: **Debay, Yves et al**
**94, Avenue Gambetta PC 0W009D**
**F-75990 Paris Cedex 20 (FR)**

Courier Press, Leamington Spa, England.

**Description**

La présente invention concerne un lecteur encodeur de carte identification.

Il existe des lecteurs de carte magnétique tels que ceux décrits dans le brevet américain 4 476 507, dans lesquels l'entraînement de la carte d'identification se fait par des galets d'entraînement dont l'axe de symétrie par rapport à leur largeur et n'est pas confondu avec l'axe de symétrie de la tête. Ceci a pour résultat d'entraîner la carte de façon asymétrique et de tendre à provoquer une rotation de la carte à l'intérieur de son guide, rotation qui entraîne des phénomènes de frottements. En général pour compenser ces phénomènes on est amené à avoir un système de guidage de la carte qui tend à plaquer cette carte en permanence contre une surface de référence. Un tel dispositif introduit un frottement supplémentaire qui d'une part use la carte et d'autre part nécessite des pressions accrues de contacts des galets sur la carte, ce qui également provoque une usure de celle-ci.

Par ailleurs, il est connu par le brevet américain 3 836 753 et par la demande de brevet européen 0 125 655 des lecteurs de carte permettant d'absorber des différences d'épaisseur de la carte sans pour autant nuire à la lecture de la piste magnétique. En général ces dispositifs sont constitués par un étrier sollicité par des moyens élastiques en direction de la carte de façon à ce que la tête magnétique supportée par cet étrier soit appliquée sur la carte avec une pression constante. Dans ces dispositifs si l'on veut assurer une lecture correcte des informations de la piste magnétique de la carte, même dans le cas d'une carte déformée, on est obligé d'accroître la pression de contact de la tête sur la carte. Cette dernière mesure a pour conséquence de provoquer une usure plus rapide de la carte et une détérioration de la piste magnétique et de la tête de lecture.

La présente invention a pour premier but de chercher à pallier les inconvénients de l'art antérieur ci-dessus, tout en proposant un lecteur de carte qui économiquement soit moins cher à réaliser.

Ce premier but est atteint par le fait que le lecteur encodeur de carte d'identification comportant un sas d'entrée, un chemin de guidage fixe, comprenant des moyens d'entraîner du sas d'entrée vers une station de lecture des cartes comportant au moins une piste magnétique et la station de lecture de la piste magnétique de la carte constituée d'un côté du chemin de guidage par une tête de lecture et de l'autre côté du chemin de guidage par un galet moteur, est caractérisé en ce que la tête de lecture des pistes magnétiques comporte deux blocs d'au moins une tête magnétique montée pivotante, suivant des axes parallèles à la direction de déplacement de la carte, à chaque extrémité de deux palonniers situés de part et d'autre des têtes, lesdits palonniers étant montés en rotation suivant un troisième axe parallèle à cette direction de déplacement de la carte sur une fourche elle-même montée pivotante suivant un quatrième axe parallèle à cette direction de déplacement de la carte, ladite fourche étant sollicitée par des moyens élastiques de façon à maintenir en permanence la tête en appui sur la carte lors de son passage.

Selon une autre caractéristique, les moyens d'entraînement sont constitués par des galets recouvrant en totalité dans leurs largeurs toutes les têtes magnétiques qui offrent une résistance mécanique à l'avancement de la carte, afin d'éviter la création d'un couple parasite de direction oblique par rapport à la trajectoire rectiligne de la carte recherchée et parallèle au chemin de guidage du lecteur.

Il est connu également par l'article IBM Technical Disclosure Bulletin, VoL. 20, No 10, Mars 1978, Page 4091 à 4092, intitulé "Encoded magnetic stripe detector with decision window", un détecteur de carte à piste magnétique qui permet d'ouvrir un volet de fermeture du chemin de transport de la carte.

Toutefois, cette commande de déverrouillage de l'ouverture n'est pas combinée avec un dispositif de détection de la largeur de la carte.

C'est un autre but de l'invention de prévoir des moyens permettant de limiter la fraude éventuelle.

Ce but est atteint par le fait que le sas d'entrée du lecteur de carte comporte des moyens de détection de la largeur de la carte, des moyens de détection de la présence d'une piste magnétique pour commander des moyens de déverrouillage d'au moins un volet pivotant actionné par la carte, et des moyens de rappel du ou des volets pivotants vers une position d'équilibre permettant la mise en place des moyens de verrouillage.

Il est également connu par le brevet américain No 4 298 116 l'utilisation d'une chicane dans une machine de distribution actionnée par des pièces.

C'est un autre but de l'invention d'éviter la fraude possible par introduction d'une carte reliée à une nappe de fils souples pour extraire les informations nécessaires à la fraude.

Ce but est atteint par le fait que le volet comporte des chicanes constituées par une denture.

Il est connu également par le brevet américain No 3 909 595, colonne 5, ligne 61, à colonne 6, ligne 2, de prévoir une fente comportant des évidements qui permettent le passage des embossages prévus sur la carte et à l'opposé un autre évidement pour éviter le frottement de la partie magnétique de la carte sur le bord de la fente.

C'est un autre but de l'invention d'utiliser une fenêtre à fente dissymétrique pour renforcer la protection du dispositif contre la fraude.

Ce but est atteint par le fait que le sas d'entrée comporte des moyens de détrompage.

Il existe également des lecteurs de carte dits mixtes qui permettent de lire des cartes portant une piste magnétique ou bien des cartes portant un circuit intégré ou des cartes portant les deux à la fois. Un tel lecteur est décrit par la demande de brevet européen No 0 134 110, mais ne comporte pas de sas d'entrée permettant d'éviter les tentatives de fraude éventuelles et de moyens de confiscation des cartes utilisées frauduleusement.

Un autre but de l'invention est de pallier les inconvénients ci-dessus.

Ce but est atteint par le fait que le lecteur comprend dans le prolongement du chemin de guidage une station de traitement de carte à circuit intégré montée de façon à obturer le chemin de guidage et à s'escamoter en cas de confiscation pour libérer un passage d'introduction dans un bac de confiscation situé sous la station de traitement.

Selon une autre caractéristique, l'escamotage du lecteur est commandé par un électro-aimant.

La présente invention apparaîtrait plus clairement à la lecture de la description ci-après, faites en référence aux dessins annexés dans lesquels:

La figure 1 représente une vue latérale schématique du lecteur;

La figure 2 représente une vue de devant du chemin de guidage et du dispositif d'entraînement du lecteur;

La figure 3.A. représente une vue de devant du sas d'entrée;

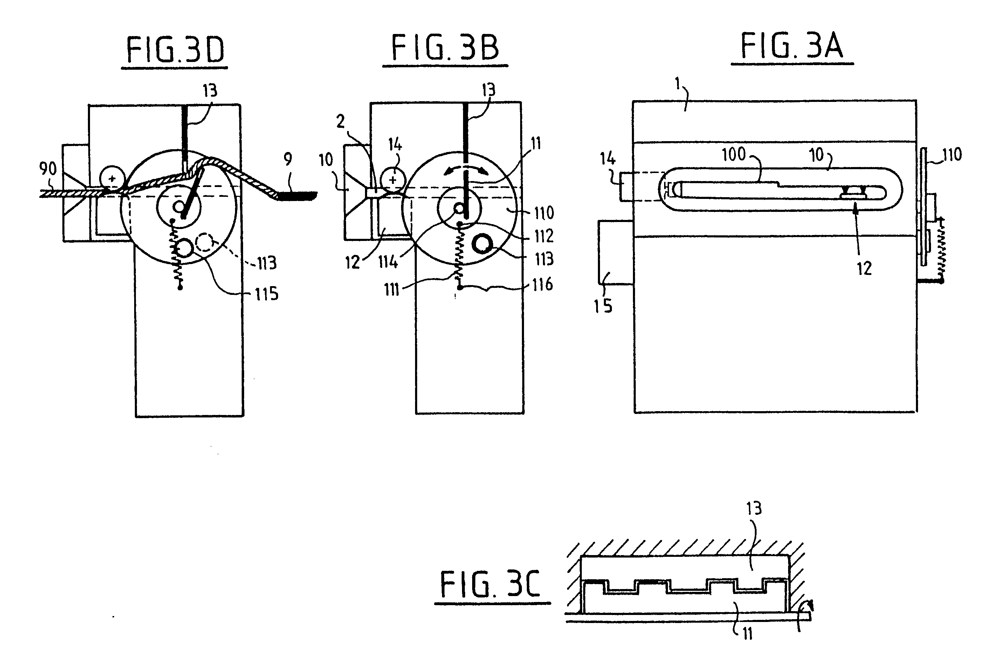

La figure 3.B. représente une vue latérale du dispositif d'obturation du sas d'entrée;

La figure 3.C. représente une vue de derrière du volet d'obturation du sas;

La figure 3.D. représente une vue latérale du sas d'obturation lors d'une tentative de fraude;

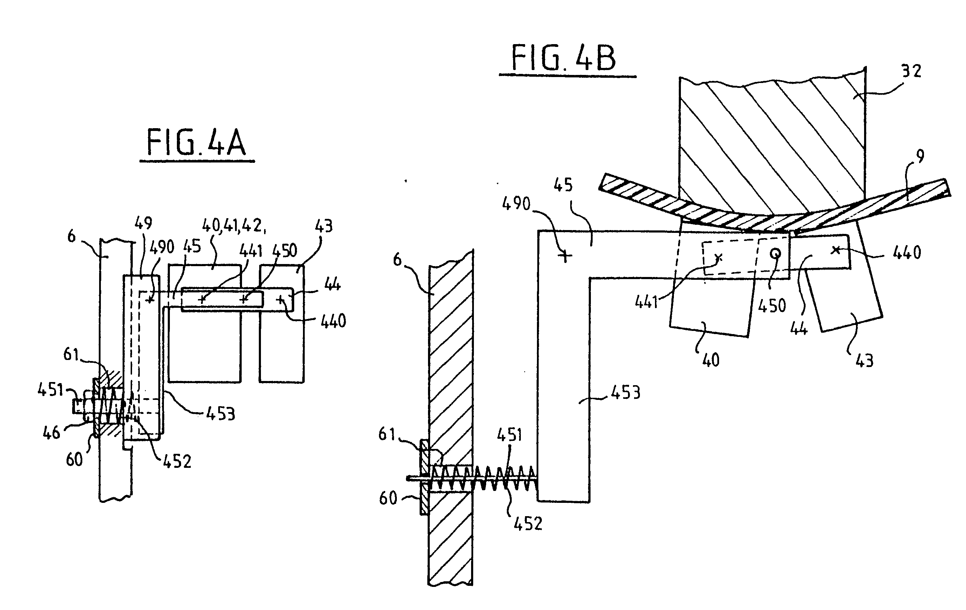

La figure 4.A. représente une vue de côté des têtes de lecture du dispositif;

La figure 4.B. représente une vue de côté suivant une direction parallèle au sens de déplacement des cartes, des têtes de lecture en action sur une carte déformée;

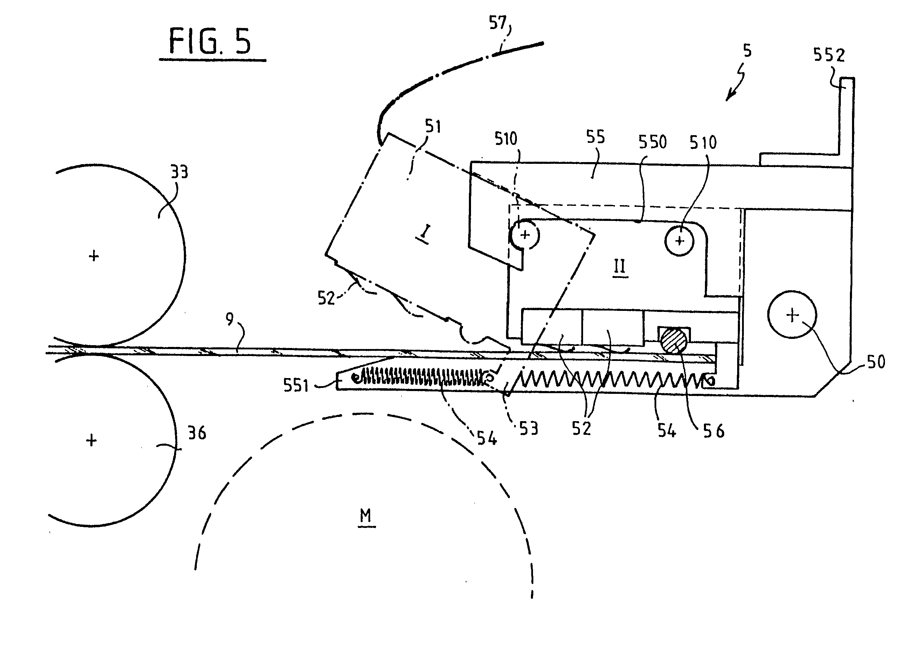

La figure 5 représente une vue latérale de la station de lecture du composant intégré;

La figure 6 représente une vue latérale du lecteur lors d'une confiscation de carte.

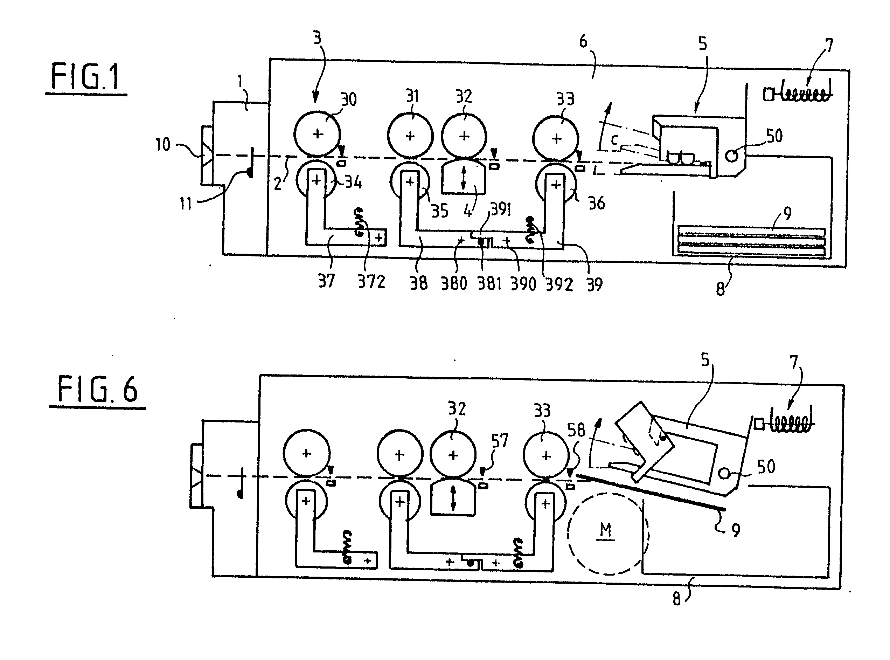

Comme on peut le voir à la figure 1 le lecteur est constitué successivement par un sas d'entrée (1), un chemin de guidage (2) dans lequel circule une carte (9) non représentée entraînée par des moyens d'entraînement (3) en direction d'une tête de lecture (4) de la piste magnétique de la carte d'identification (9) et par la suite en direction d'une station (5) de lecture écriture du circuit intégré de la carte d'identification (9). Ce lecteur permet donc d'acceuillir des cartes à piste magnétique, des cartes à circuit intégré, ou des cartes mixtes comportant à la fois la piste magnétique et le circuit intégré. Cette station de traitement (5) est montée pivotante autour d'un axe (50) de façon à pouvoir être actionnée par un électro-aimant (7) qui permet son basculement entre deux positions L, C l'une, L, correspondant à la lecture des informations contenues par le circuit intégré, l'autre C correspondant à la position de confiscation d'une carte. Le dispositif d'entraînement (3) est constitué par une série de quatre galets moteurs (30, 31, 32, 33), contre lesquels la carte est appliquée par des contregalets (34, 35, 36), et les têtes de lecture (4). Les contregalets (34, 35, 36) sont montés sur des bras en L respectivement (37, 38, 39). Ces bras en L sont eux-mêmes montés pivotants sur des axes solidaires d'une platine (6) et sont sollicités par des moyens élastiques (372, 392) de façon à maintenir les contregalets en appui sur la carte au moment de son passage avec une pression déterminée. Les contregalets (35, 36) entourant les têtes de lecture (4) sont montés sur des bras (38; 39) liés mécaniquement par un dispositif connu, constitué par une goupille (381) et un doigt (391) de façon à ce que le passage de la carte entre les galets (35 et 31) provoque l'écartement des galets (36 et 33), ceci pour éviter le freinage de la carte à la sortie de la tête de lecture, lorsque celle-ci se présente entre les deux galets (33 et 36). Les cartes confisquées sont introduites dans un bac (36). Les cartes confisquées sont introduites dans un bac (8) de confiscation. A l'entrée, les cartes sont glissées dans l'ouverture (10) en forme de cône et poussées en direction du volet d'obturation (11) par le client.

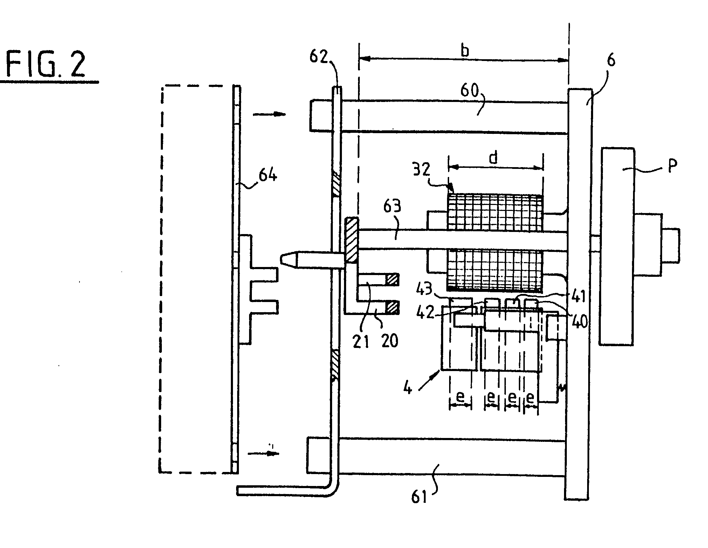

La figure 2 représente une vue dans le sens de déplacement des cartes du lecteur sans son sas d'entrée. Le lecteur est constitué d'une platine (6) qui supporte les différents éléments. Cette platine supporte des entretoises (60, 61) au bout desquelles une plaque (62) est montée, supportant le circuit imprimé (64). La platine (6) supporte des entretoises (63) qui maintiennent à une distance b le chemin de guidage (2). Le chemin de guidage est constitué d'une part, par une fourche ayant des dents (21, 20) et dont l'entredent se trouve dans le prolongement du plan séparant le galet moteur (32) de la tête magnétique (4), d'autre part par les galets (30 à 33) et les contregalets (34 à 36). Comme on peut le voir sur cette figure le galet moteur (32) a une largeur minimum (d) qui recouvre au moins en totalité dans leurs largeurs (e), tous les éléments (4) des têtes magnétiques de lecture venant en contact avec les cartes magnétiques afin d'éviter la création d'un couple parasite et de direction oblique par rapport à la trajectoire rectiligne recherchée et parallèle au chemin prédéfini du lecteur. Cet ensemble (4) comporte trois têtes de lecture (40, 41, 42) disposées dans un seul bloc et une quatrième tête de lecture (43) montée toute seule. Cet ensemble de têtes (4) est monté de façon représentée à la figure (4A) au moyen de deux palonniers (44) disposés de part et d'autre des têtes (40 à 43) et au moyen d'une fourche de support (45). La tête (43) est articulée sur les deux palonniers (44) au moyen d'un axe (440) situé à une première extrémité des palonniers et parallèle à la direction du chemin de guidage, tandis que les têtes (40 à 42) réunies en un seul sous-ensemble sont articulées autour d'un axe (441) supporté à la deuxième extrémité des deux palonniers (44) et parallèle à l'axe (440). Les extrémités de la fourche de support (45) supportent un axe (450) qui passe par le milieu des deux palonniers de façon à ce que ceux-ci soient articulés sur la fourche (45). Cette fourche (45) est articulée autour d'un axe (490) qui est solidaire de deux flasques (49), disposés de part et d'autre des têtes, et solidaires de la platine (6). La fourche (45) présente un profil en forme de L qui comporte, à l'extrémité de la branche (453) ne supportant pas l'axe de pivotement (450), un goujon (451) qui traverse la platine (6) dans un trou (61) ménagé dans celle-ci. Une rondelle (60) solidaire de la platine (6) permet à un ressort (452) passant dans le trou (61), de s'appuyer sur cette rondelle et sur l'extrêmité du bras (453) de la fourche (45). Un écrou (46) permet par vissage sur le goujon (451) de régler le jeu entre les têtes et le galet moteur qui leur est opposé. Les galets sont montés au moyen de roulements à billes sur les axes d'entraînement, eux-mêmes entraînés par un moteur M (fig. 5) par l'intermédiaire d'un système à courroie (non représentée) et poulie P (fig. 2). Les différents organes moteur, têtes de lecture magnétique, tête de lecture à circuit intégré, dispositif de verrouillage sont commandés par une carte électronique qui est montée solidaire des entretoises (60 et 61).

La figure 4B permet de mettre en évidence l'intérêt d'un tel montage des têtes de lecture magnétique. Comme on peut le voir sur cette figure, une carte (9) déformée, est quand même lue correctement par les têtes de lecture qui grâce au sytème d'articulation de la fourche (45) et du palonnier viennent s'appliquer sur les pistes magnétiques correspondantes. Ce système permet lorsque la déformation de la carte est dûe à l'usure du galet d'entraînement (32) d'avoir une lecture correcte.

Le sas d'entrée (1) qui est monté de façon amovible par rapport à la platine (6) est contitué comme on peut le voir sur la figure 3A à 3C d'une ouverture tronconique (10) qui se termine dans sa partie la plus étroite donnant accès au chemin de guidage (2) par une fente présentant un décrochage asymétrique (100) de façon à constituer un moyen de détrompage pour les cartes magnétiques pourvues d'embossage. En retrait de l'ouverture de détrompage se trouve une tête magnétique ou autre système de détection (12) qui permet d'assurer la détection d'une piste magnétique. A la hauteur de cette tête magnétique et disposé latéralement par rapport à l'ouverture d'introduction des cartes se trouve un interrupteur (14) qui permet d'assurer une détection de largeur des cartes introduites. A l'arrière de ces deux éléments de détection, par rapport au sens d'introduction de la carte, se trouve un volet (11) monté sur un axe de rotation (114), à une extrê-mité duquel se trouve un disque (110) solidaire de cet axe (114). Un ressort (111) dont une extrêmité est rendue solidaire du boitier du sas d'entrée (1) et dont l'autre extrêmité est solidaire d'une goupille (112) elle-même solidaire du disque (110), permet de ramener le volet d'obturation (11) dans sa position de fermeture du chemin de guidage (2). Un deuxième volet fixe (13) coopère avec le premier volet mobile (11). Comme on peut le voir sur la figure 3C les deux volets sont pourvus de dentures complémentaires de façon à constituer des chicanes antifraude. Le disque (110) est pourvu d'une ouverture qui permet l'introduction d'un doigt de verrouillage (113), lui-même solidaire du noyau plongeur d'un electro-aimant non représenté sur la figure. Un dispositif (15) constitué par tout moyen connu de l'homme de métier permet de détecter le verrouillage du disque. Ce dispositif (15) peut-être, par exemple, un interrupteur qui détectera la position du noyau plongeur de l'électro-aimant. De façon connue, lorsqu'une piste magnétique est détectée par la tête (12) et une largeur de carte correcte est détectée par le dispositif (14), le circuit de commande provoque le déverrouillage du disque (110) par retrait du doigt (113) et la carte poussée par le client peut faire basculer le volet d'obturation (11). Le sas d'entrée (1) étant de dimension inférieure à la longueur de la carte celle-ci traversera le sas d'entrée et sera prise entre le galet d'entraînement (30) et son contregalet (34) et entraînée par le dispositif monté sur la platine (6).

La figure 3D permet de mettre en évidence l'intérêt du dispositif d'obturation du sas lors d'une tentative de fraude. Sur cette figure on a représenté une nappe de fils souples (90) reliés à une carte bancaire (9) qui comporte au moins un système à microprocesseur ou circuit intégré. Cette nappe de fils souples (90) est destinée à établir une liaison entre le bloc de contact (5) permettant d'accéder au système informatique de la banque et un dispositif de fraude conçu par le fraudeur. Dans ce cas le système à chicanes des volets d'obturation empêche le retour du disque (110) à sa position de fermeture et par conséquent l'introduction du doigt de verrouillage (113) dans l'orifice (115). Dans ce cas le verrouillage du sas d'entrée n'étant pas détecté le dispositif ne permettra aucune transaction et par conséquent le fraudeur ne pourra pas avoir accès aux informations du système bancaire.

La figure 5 représente une carte (9) qui a été introduite par le galet d'entraînement (33) et son contre galet (36) dans la fente ménagée dans le dispositif de lecture (5) de cartes à circuit intégré. Ce dispositif comporte un bloc mobile (51) supportant à sa partie inférieure une série de blocs de contacts (52) et un jonc (56) en caoutchouc placé dans une gorge de façon à venir appuyer sur la carte (9) lorsque le bloc de lecture (51) est dans la position de travail, représenté par la référence II. Ce bloc de lecture (51) est monté mobile dans une pièce support (55) articulée autour d'un axe de pivotement (50), lui-même solidaire de la platine (6). Cette pièce de support (55) présente une lèvre inférieure (551) à l'intérieur de laquelle est placé un ressort de rappel (54) dont une extrêmité est fixée à l'extrêmité libre ou avant de la lèvre inférieure (551) et l'autre extrêmité est fixée à l'extrêmité d'un ergot (53) placé à la partie inférieure arrière du bloc de lecture (51). Un doigt ou axe (510) solidaire du bloc de lecture (51) et monté à la partie supérieure arrière de celui-ci, se déplace dans une découpe (550) parallèle à la lèvre (551) et à la direction de déplacement des cartes et aménagée dans la pièce de support (55) de façon à guider le déplacement du bloc (51) entre sa position de repos (I) et sa position de travail (II). Lors du déplacement du bloc (51) entre les positions I et II, il se crée un déplacement relatif des contacts (52) par rapport à la carte (9) qui opère un autonettoyage des surfaces de contact en présence. Un ruban souple (57) permet de réaliser la connexion électrique entre les contacts (52) et le dispositif de traitement des informations contenues par le circuit intégré de la carte. Une pièce métallique (552) en forme de palette solidaire du support (55) permet au noyau d'un électro-aimant (7) d'attirer l'ensemble de lecture dans une position haute basculée autour de l'axe (50), position qui libère l'accès à un boitier de confiscation (8) des cartes (9), (comme représenté figure 6). Des détecteurs photo-électriques (57, 58) placés sur le trajet de la carte, permettent de connaître sa position et au circuit logique de commande de provoquer les différentes actions nécessaires au fonctionnement du lecteur.

Le fonctionnement de la station de lecture pour circuit intégré et du dispositif de confiscation de cartes va maintenant être expliqué à l'aide des figures 5 et 6. Lors d'un fonctionnement normal avec une carte mixte, la carte franchit le sas d'entrée (1) passe à la station de lecture de la piste magnétique (4) et est entraînée par les galets vers la station (5) de lecture du circuit intégré. La carte entraînée par les galets (32 et 33) vient en butée contre l'ergot (53) du bloc de lecture (51) qui est dans la position I de la figure 5. La carte (9) poussée par le galet d'entraînement (33) provoque le déplacement du bloc de lecture (51) pour l'amener contre l'action du ressort de rappel (54) dans la position de travail 2. Pendant ce déplacement les contacts (52) viennent se mettre en place en face des plots de contacts du circuit intégré monté sur la carte (9). Le moteur M d'entraînement des galets (30 à 33) est arrêté par l'action du bloc de lecture (51) qui en fin de course commande lorsqu'il arrive dans sa position II un interrupteur (non représenté). Lorsque la transaction s'est effectuée normalement le moteur est mis en route en sens inverse et la carte (9) est entraînée en sens inverse par les galets pour être restituée à son propriétaire. Dans le cas où à la fin de la transaction l'appareil aboutit à la conclusion que la carte doit être confisquée il procède de la façon suivante.

Lorsque la transaction a été effectuée par l'intermédiaire de la liaison électrique (56) entre le système bancaire et le circuit intégré, l'ordre de mise en route des galets d'entrainement est envoyée au lecteur et le sens de rotation du galet (33) est inversé pour extraire la carte (9) du logement défini entre la lèvre (551) et la face inférieure du bloc (51) portant les contacts (52). Si la carte doit être confisquée dès que le détecteur photoélectrique (58) placé entre le galet (36) et le bloc (5), détecte l'absence de la carte, c'est-à-dire lorsque celle-ci se trouve au niveau de la station de lecture magnétique, la logique du circuit électronique commande l'alimentation de l'électro-aimant (7) qui provoque le basculement du bloc (5) dans la position de confiscation représentée à la figure 6. Le bloc (5) ayant été basculé le sens de rotation des galets est à nouveau inversé et la carte (9) est entraînée par les galets (32 et 33), en direction du bac de confiscation (8) de façon à amener la carte (9) dans le bac de confiscation (8).

**Revendications**

1. Lecteur encodeur de carte d'identification comportant un sas d'entrée (1), un chemin de guidage fixe (2), comprenant des moyens d'entraîner (30 à 36) du sas d'entrée vers une station de lecture des cartes comportant au moins une piste magnétique et la station de lecture (4) de la piste magnétique de la carte (9) constituée d'un côté du chemin de guidage (2) par une tête de lecture (4) et de l'autre côté du chemin de guidage par un galet moteur (32), caractérisé en ce que la tête de lecture (4) des pistes magnétiques comporte deux blocs (40, 43) d'au moins une tête magnétique montée pivotante, suivant des axes (440, 441) parallèles à la direction de déplacement de la carte, à chaque extrémité de deu palonniers (44) situés de part et d'autre des têtes, lesdits palonniers étant montés en rotation suivant un troisième axe (450) parallèle à cette direction de déplacement de la carte sur une fourche (45) elle-même montée pivotante suivant un quatrième axe (490) parallèle à cette direction de déplacement de la carte, ladite fourche étant sollicitée par des moyens élastiques (452) de façon à maintenir en permanence la tête en appui sur la carte (9) lors de son passage.

2. Lecteur encodeur de carte selon la revendication 1, caractérisé en ce que les moyens d'entraîner sont constitués par des galets recouvrant en totalité dans leurs largeurs toutes les têtes magnétiques qui offrent une résistance mécanique à l'avancement de la carte, afin d'éviter la création d'un couple parasite de direction oblique par rapport à la trajectoire rectiligne de la carte recherchée et parallèle au chemin de guidage du lecteur.

3. Lecteur de la carte selon la revendication 1, caractérisé en ce que le sas d'entrée (1) comporte des moyens de détection (14) de la largeur de la carte, des moyens (12) de détection de la présence d'une piste magnétique pour commander des moyens (113) de déverrouillage d'au moins un volet pivotant (11) actionné par la carte (9), et des moyens de rappel (111) du ou des volets pivotants (11) vers une position d'équilibre permettant la mise en place des moyens de verrouillage (113).

4. Lecteur de cartes selon la revendication 3, caractérisé en ce que le volet (11) comporte des chicanes constituées par une denture.

5. Lecteur selon la revendication 3 ou 4, caractérisé en ce que le sas d'entrée (1) comporte des moyens de détrompage (100).

6. Lecteur selon une des revendications 1 à 5, caractérisé en ce qu'il comprend dans le prolongement du chemin de guidage (2) une station (5) de traitement de carte à circuit intégré montée de façon à obturer le chemin de guidage et à s'escamoter en cas de confiscation pour libérer un passage d'introduction dans un bac de confiscation (8) situé sous la station de traitement.

7. Lecteur selon la revendication 6, caractérisé en ce que l'escamotage du lecteur 5 est commandé par un électro-aimant (7).

**Patentansprüche**

1. Encoderleser für eine Identifikationskarte, mit einem Eintritt (1), einer festen Führungsbahn (2) und Mitnahmeeinrichtungen (30 bis 36) vom Eintritt zur Kartenlesestation, mit wenigstens einem Magnetstreifen, wobei die Lesestation (4) des Magnetstreifens der Karte (9) auf der einen Seite der Führungsbahn (2) durch einen Lesekopf (4) und auf der anderen Seite der Führungsbahn durch ein Motorrad (32) gebildet ist, dadurch gekennzeichnet, daß der Lesekopf (4) der magnetischen Streifen zwei Blöcke (40, 43) mit wenigstens einem Magnetkopf aufweist, der nach zur Verschieberichtung der Karte an jedem Ende zweier Hebel (44) zu beiden Seiten der Köpfe parallelen Achsen (440, 441) schwenkbar angeordnet ist, wobei die Hebel drehbar um eine dritte Achse (450) sind, die zu dieser Verschieberichtung der Karte parallel auf einer Gabel (45) angeordnet sind, die selbst schwenkbar um eine vierte Achse (490) parallel zur Verschieberichtung der Karte ist, und wobei die Gabel durch elastische Einrichtungen (452) beaufschlagt ist, um ständig den Kopf auf der Karte (9) während ihres Durchtrittes in Anlage zu halten.

2. Kartenencoderleser nach Anspruch 1, dadurch gekennzeichnet, daß die Mitnahmeeinrichtungen durch Räder gebildet sind, die über ihre gesamte Länge alle Magnetköpfe abdecken, die einen mechanischen Widerstand gegen die Weiterbewegung der Karte bilden, um die Bildung einer parasitären Verbindung in schräger Richtung zur gewünschten geradlinigen Bahn der Karte und parallel zur Führungsbahn des Lesers zu vermeiden.

3. Kartenleser nach Anspruch 1, dadurch gekennzeichnet, daß der Eintritt (1) Feststelleinrichtungen (14) der Größe der Karte, Feststelleinrichtungen (12) des Vorhandenseins eines Magnetstreifens zur Steuerung der Entriegelungseinrichtungen (113) wenigstens einer schwenkbaren Klappe (11) zu steuern, die durch die Karte (9) betätigt wird, und Rückstelleinrichtungen (111) der schwenkbaren Klappe(n) (11) in eine Gleichgewichtslage aufweist, um die Verriegelungseinrichtungen (113) in ihre Lage zu bringen.

4. Kartenleser nach Anspruch 3, dadurch gekennzeichnet, daß die Klappe (11) durch eine Verzahnung gebildete Schikanen aufweist.

5. Leser nach Anspruch 3 oder 4, dadurch gekennzeichnet, daß der Eintritt (1) Fehlerfeststelleinrichtungen (100) aufeist.

6. Leser nach einem der Ansprüche 1 bis 5, dadurch gekennzeichnet, daß er in der Verlängerung der Führungsbahn (2) eine Behandlungsstation (5) der Karte mit integriertem Schaltkreis aufweist, die angeordnet ist, um die Führungsbahn zu blockieren und sich öffnet im Falle der Beschlagnahme, um den Eintritt in einen Beschlagnahmebehälter (8) unterhalb der Behandlungsstation freizulegen.

7. Leser nach Anspruch 6, dadurch gekennzeichnet, daß die Umleitung im Leser (5) durch einen Elektromagneten (7) gesteuert wird.

**Claims**

1. An identification card code reader comprising an entry air lock (1), a fixed guide path (2) having means (30 to 36) for entraining, from the entry air lock towards a reading station, cards comprising at least one magnetic track and the station (4) for reading the magnetic track of the card (9) being formed at one side of the guide path (2) by a read head (4) and at the other side of the guide path by a motor roller (32), characterized in that the head (4) for reading the magnetic tracks comprises two blocks (40, 43) of at least one magnetic head pivotally mounted, along axes (440, 441) parallel to the direction of displacement of the card, at each extremity of two rocking levers (44) situated at either side of the heads, said rocking levers being rotationally mounted along a third axis (450) parallel to said direction of displacement of the card on a fork (45) which is itself pivotally mounted along a fourth axis (490) parallel to said direction of displacement of the card, said fork being urged by resilient means (452) in such manner as to keep the head bearing constantly on the card (9) during its passage.

2. A card code reader according to claim 1, characterized in that the entraining means are formed by rollers totally covering in their widths all the magnetic heads which offer mechanical resistance to the advance of the card, in order to prevent the creation of an interference couple of oblique direction with respect to the sought rectilinear path of the card and parallel to the guiding track of the reader.

3. A card reader according to claim 1, characterized in that the entry gate (1) comprises means (14) for detecting the width of the card, means (12) for detecting the presence of a magnetic track for controlling means (113) for releasing at least one pivoting flap (11) actuated by the card (9), and means (111) for returning the pivoting flap or flaps (11) to a position of balance allowing the locking means (113) to be placed in position.

4. A card reader according to claim 3, characterized in that the flap (11) comprises baffles formed by a gearing.

5. A reader according to claim 3 or 4, characterized in that the entry gate (1) comprises correcting means (100).

6. A reader according to one of the claims 1 to 5, characterized in that it includes, in the extension of the guide path (2), an integrated circuit card processing station (5) arranged in such manner as to block the guide path and as to be retracted in case of confiscation to uncover a passage for introduction into a confiscation container (B) situated below the processing station.

7. A reader according to claim 6, characterized in that the retraction of the reader (5) is operated by means of an electromagnet (7).

FIG.1

FIG.6

EP 0 215 712 B1

FIG. 2

2

FIG.3A

FIG.3B

FIG.3C

FIG.3D

## FIG.4A

## FIG.4B

EP 0 215 712 B1

FIG. 5